# EUROPEAN PATENT APPLICATION

(11) **EP 3 889 862 A1**
(43) Date of publication of application: **06.10.2021**
(21) Application number: 20196724.7
(22) Date of filing: 31.07.2015
(51) Int. Cl.: G06Q 20/10, G06Q 30/02, G06Q 40/02

(54) **METHODS AND SYSTEMS FOR ELECTRONIC TRANSACTIONS**

(30) Priority: 31.07.2014 US 201462031418 P; 16.01.2015 US 201562104128 P
(62) Divisional of application: 15826467.1
(71) Applicant: Globeone LLC, Santa Monica, CA 90401 (US)
(72) Inventor: Ross, Jerry, Oklahoma City, OK 73116 (US)
(74) Representative: CH Kilger Anwaltspartnerschaft mbB

(57) **Abstract**

An example system can comprise a closed group of member financial institution servers. The system can comprise a data feed manager configured to communicate amongst the closed group of member financial institution servers over a network. The system can comprise a data aggregator configured to aggregate data related to transactions conducted by the closed group of member financial institution servers. The aggregated data can comprise an aggregated interest from the transactions. The system can comprise a distribution manager configured to determine one or more distribution levels for the member financial institutions and one or more seeding entities based on the aggregated data.

## Description

### CROSS REFERENCE TO RELATED APPLICATIONS

This application claims priority to U.S. Provisional Application Ser. No. 62/031,418, filed July 31, 2014, entitled, "Methods and Systems for Financial Service" and U.S. Provisional Application Ser. No. 62/104,128, filed January 16, 2015, entitled, "Methods and Systems for Financial Service," the contents of each application are hereby incorporated by reference.

### BACKGROUND

The number of people living paycheck to paycheck is growing despite their economic status. Unbanked and under-banked population is a concern and one of the fastest developing markets of opportunity in financial services. Currently, this population is either paying high fees or consciously choosing not to have a banking relationship for lack of services that meet their needs. To date, alternative financial service providers such as payday lenders, check cashers and money transfer companies have in many ways become predatory creating debt cycles via high fee services. There is a need for more sophisticated methods and systems for financial service.

### SUMMARY

The disclosed methods and systems related to structure and operational processes for financial service. An example system can comprise a closed group of member financial institution servers. The system can comprise a data feed manager configured to communicate amongst the closed group of member financial institution servers over a network. The system can comprise a data aggregator configured to aggregate data related to transactions conducted by the closed group of member financial institution servers. The aggregated data can comprise an aggregated interest from the transactions. The system can comprise a distribution manager configured to determine one or more distribution levels for the member financial institutions and one or more seeding entities based on the aggregated data.

In an example method data related to one or more electronic transactions requested by one or more financial consumer devices of one or more financial consumers and performed by one or more member financial institutions can be received by a data feed manager. An aggregate interest derived from the one or more electronic transactions can be determined. A hierarchical link between the one or more financial consumers can be determined by a distribution manager. The hierarchical link can identify a relationship between the one or more financial consumers. The distribution manager can determine one or more shares in the aggregate interest to be divided amongst one or more of, the one or more financial consumers and the one or more member financial institutions, based at least in part on the hierarchical link.

In another example method, an indication of a request for a monetary transfer can be received from a first member financial institution server of a plurality of member financial institution servers. The request for the monetary transfer can be from a first electronic account of a sending member consumer to a second electronic account of a receiving consumer. A data feed manager determined whether the second electronic account is associated with a second member financial institution server or associated with a non-member financial institution server. If the electronic monetary transfer is associated the second member financial institution server, data indicative of the electronic monetary transfer can be transferred by the data feed manager to a monetary transfer data aggregator. If the monetary transfer is destined for the non-member financial institution, the data feed manager can send an electronic notification to the receiving consumer to join one of the plurality of member financial institutions.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The accompanying drawings, which are incorporated in and constitute a part of this specification, illustrate embodiments and together with the description, serve to explain the principles of the methods and systems:
Figure 1 is a block diagram illustrating an example system;
Figure 2 is block diagram illustrating an example computing system in which the present methods and systems can operate;
Figure 3 is a block diagram illustrating an example system;
Figure 4A is a flowchart illustrating a new member signup;
Figure 4B is a flowchart illustrating a new member signup;
Figure 5 is a flowchart illustrating a fee payment and funding process;
Figure 6A is a flowchart illustrating a money transfer process;
Figure 6B is a flowchart illustrating a money transfer process;
Figure 7 is a flowchart illustrating an employer online and/or email invitation setup;
Figure 8 is a flowchart illustrating an employer online batch application setup;
Figure 9 is a flowchart illustrating an employer electronic file application setup;
Figure 10 is a flowchart illustrating employer paper batch applications;
Figure 11 is a flowchart illustrating a member personal and global community process;
Figure 12 is a flowchart illustrating a daily settlement process;
Figure 13 is a flowchart illustrating a daily settlement process detail;
Figure 14A is a flowchart illustrating a money transfer process;
Figure 14B is a flowchart illustrating a money transfer process;
Figure 15 is a flowchart illustrating a corporate member invitation process;
Figure 16 is a flowchart of an example method; and
Figure 17 is a flowchart of an example method.

### DETAILED DESCRIPTION

Before the present methods and systems are disclosed and described, it is to be understood that the methods and systems are not limited to specific methods, specific components, or to particular configurations. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers or steps. "Exemplary" means "an example of' and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the Examples included therein and to the Figures and their previous and following description.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Embodiments of the methods and systems are described below with reference to block diagrams and flowchart illustrations of methods, systems, apparatuses and computer program products. It will be understood that each block of the block diagrams and flowchart illustrations, and combinations of blocks in the block diagrams and flowchart illustrations, respectively, can be implemented by computer program instructions. These computer program instructions may be loaded onto a general purpose computer, special purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that can direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

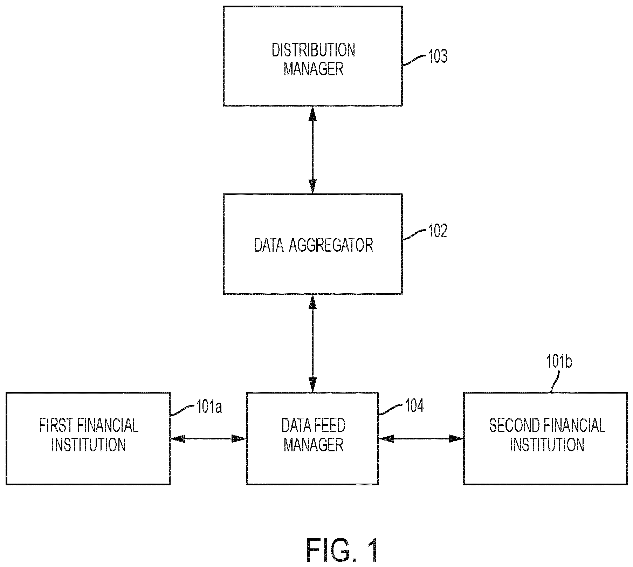

**FIG. 1** is a block diagram of an example system **100.** The system **100** can comprise a closed network of member financial institutions (e.g., first financial institution **101a,** second financial institution **101b).** The system **100** can comprise a data feed manager **104.** The data feed manager **104** can be configured to communicate a data feed amongst the network of member financial institutions (e.g., first financial institution **101a,** second financial institution **101b).** The system **100** can comprise a data aggregator **102.** The data aggregator **102** can be configured for aggregating data related to transactions conducted by the network of member financial institutions (e.g., first financial institution **101a,** second financial institution **101b).** The system **100** can comprise a distribution manager **103.** The distribution manager **103** can be configured to determine one or more distribution levels for the member financial institutions. In an aspect, the disclosed methods and systems can comprise a centralized and/or a decentralized model. In the centralized model, one or more components of the system **100** can be located or managed in a centralized manner. In the decentralized model, one or more components of the system **100** can be located or managed in a decentralized manner.

In an aspect, the distribution manager **103** can be configured to establish licensing agreements with a network of member financial institutions (e.g., banks) that enable their unique functionalities and establish operating rules for the network. Member Banks ("member financial institutions") can provide service and operational support for a relationship banking package that encourages long term savings, reduces exposure to excessive and predatory finance charges, and provides a set of financial service capabilities that appeal to the target market.

In an aspect, data related to one or more transactions requested by one or more financial consumers and performed by one or more member financial institutions (e.g., first financial institution **101a,** second financial institution **101b)** can be received at the data feed manager **104.** The received data can be aggregated at the data aggregator **102.** The aggregated data can be transmitted to the distribution manager **103.** An aggregate interest derived from the one or more transactions can be determined at the distribution manager **103.** A hierarchical link between the one or more financial consumers can be determined at the distribution manager **103.** One or more shares in the aggregate interest to be divided amongst one or more of, the one or more financial consumers and the one or more member financial institutions can be determined at the distribution manager **103** based at least in part on the hierarchical link.

In an aspect, a request for a monetary transfer can be received by a first member financial institution (e.g., **101a**). It can be determined whether the request for the monetary transfer originates from a second member financial institution (e.g., **101b)** or from a non-member financial institution (not shown). If the monetary transfer originated from the second member financial institution, data indicative of the monetary transfer can be transferred to a monetary transfer data aggregator. If the monetary transfer originated from the non-member financial institution, a monetary amount indicated by the requested monetary transfer can be transferred to the non-member financial institution.

In an aspect, a request for a monetary transfer can be received by a first member financial institution (e.g., **101a).** It can be determined whether the request for the monetary transfer is destined for a second member financial institution (e.g., **101b)** or is destined for a non-member financial institution (not shown). If the monetary transfer is destined for the second member financial institution, data indicative of the monetary transfer can be transferred to the monetary transfer data aggregator 102. If the monetary transfer is destined for the non-member financial institution, the methods and systems can determine a recipient consumer for the monetary transfer and invite the recipient consumer to join one of a plurality of member financial institutions.

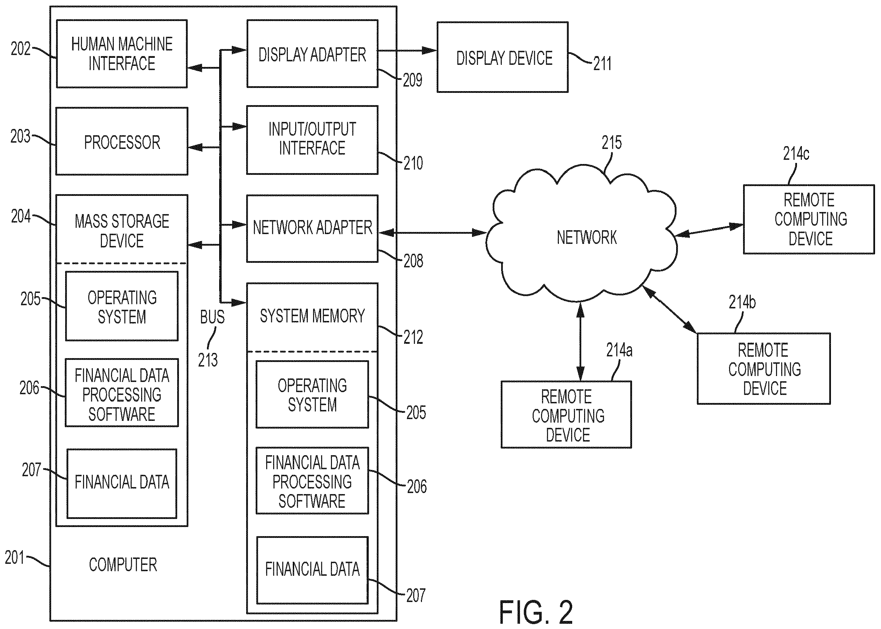

The system has been described above as comprised of units. One skilled in the art will appreciate that this is a functional description and that the respective functions can be performed by software, hardware, or a combination of software and hardware. A unit can be software, hardware, or a combination of software and hardware. The units can comprise the financial data processing software **206** as illustrated in **FIG. 2** and described below. In one exemplary aspect, the units can comprise a computer **201** as illustrated in **FIG. 2** and described below. As an example, the computer **201** can be one or more of the data aggregator **102,** the distribution manager **103,** and data feed manager **104.**

**FIG. 2** is a block diagram illustrating an exemplary operating environment for performing the disclosed methods. This exemplary operating environment is only an example of an operating environment and is not intended to suggest any limitation as to the scope of use or functionality of operating environment architecture. Neither should the operating environment be interpreted as having any dependency or requirement relating to any one or combination of components illustrated in the exemplary operating environment.

The present methods and systems can be operational with numerous other general purpose or special purpose computing system environments or configurations. Examples of well known computing systems, environments, and/or configurations that can be suitable for use with the systems and methods comprise, but are not limited to, personal computers, server computers, laptop devices, and multiprocessor systems. Additional examples comprise set top boxes, programmable consumer electronics, network PCs, minicomputers, mainframe computers, distributed computing environments that comprise any of the above systems or devices, and the like.

The processing of the disclosed methods and systems can be performed by software components. The disclosed systems and methods can be described in the general context of computer-executable instructions, such as program modules, being executed by one or more computers or other devices. Generally, program modules comprise computer code, routines, programs, objects, components, data structures, etc. that perform particular tasks or implement particular abstract data types. The disclosed methods can also be practiced in grid-based and distributed computing environments where tasks are performed by remote processing devices that are linked through a communications network. In a distributed computing environment, program modules can be located in both local and remote computer storage media including memory storage devices.

Further, one skilled in the art will appreciate that the systems and methods disclosed herein can be implemented via a general-purpose computing device in the form of a computer **201.** The components of the computer **201** can comprise, but are not limited to, one or more processors or processing units **203,** a system memory **212,** and a system bus **213** that couples various system components including the processor **203** to the system memory **212.** In the case of multiple processing units **203,** the system can utilize parallel computing.

The system bus **213** represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus **213,** and all buses specified in this description can also be implemented over a wired or wireless network connection and each of the subsystems, including the processor **203,** a mass storage device **204,** an operating system **205,** financial data processing software **206,** financial data **207,** a network adapter **208,** system memory **212,** an Input/Output Interface **210,** a display adapter **209,** a display device **211,** and a human machine interface **202,** can be contained within one or more remote computing devices **214a,b,c** at physically separate locations, connected through buses of this form, in effect implementing a fully distributed system.

The computer **201** can comprise a variety of computer readable media. Exemplary readable media can be any available media that is accessible by the computer **201** and comprises, for example and not meant to be limiting, both volatile and non-volatile media, removable and non-removable media. The system memory **212** comprises computer readable media in the form of volatile memory, such as random access memory (RAM), and/or non-volatile memory, such as read only memory (ROM). The system memory **212** can contain data such as financial data **207** and/or program modules such as operating system **205** and financial data processing software **206** that are immediately accessible to and/or are presently operated on by the processing unit **203.**

In another aspect, the computer **201** can also comprise other both volatile and non-volatile media, removable and non-removable computer storage media. By way of example, **FIG. 2** illustrates a mass storage device **204** which can provide non-volatile storage of computer code, computer readable instructions, data structures, program modules, and other data for the computer **201.** For example and not meant to be limiting, a mass storage device **204** can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device **204,** including by way of example, an operating system **205** and financial data processing software **206.** Each of the operating system **205** and financial data processing software **206** (or some combination thereof) can comprise elements of the programming and the financial data processing software **206.** Financial data **207** can also be stored on the mass storage device **204.** Financial data **207** can be stored in any of one or more databases known in the art. Examples of such databases comprise, DB2®, Microsoft® Access, Microsoft® SQL Server, Oracle®, mySQL, PostgreSQL, and the like. The databases can be centralized or distributed across multiple systems.

In another aspect, the user can enter commands and information into the computer **201** via an input device (not shown). Examples of such input devices comprise, but are not limited to, a keyboard, pointing device (e.g., a "mouse"), a microphone, a joystick, a scanner, tactile input devices such as gloves, and other body coverings, and the like. These and other input devices can be connected to the processing unit **203** via a human machine interface **202** that is coupled to the system bus **213,** but can be connected by other interface and bus structures, such as a parallel port, game port, an IEEE 1394 Port (also known as a Firewire port), a serial port, or a universal serial bus (USB).

In yet another aspect, a display device **211** can also be connected to the system bus **213** via an interface, such as a display adapter **209.** It is contemplated that the computer **201** can have more than one display adapter **209** and the computer **201** can have more than one display device **211.** For example, a display device can be a monitor, an LCD (Liquid Crystal Display), or a projector. In addition to the display device **211,** other output peripheral devices can comprise components such as speakers (not shown) and a printer (not shown) which can be connected to the computer **201** via Input/Output Interface **210.** Any step and/or result of the methods can be output in any form to an output device. Such output can be any form of visual representation, including, but not limited to, textual, graphical, animation, audio, tactile, and the like.

The computer **201** can operate in a networked environment using logical connections to one or more remote computing devices **214a,b,c.** By way of example, a remote computing device can be a personal computer, portable computer, a server, a router, a network computer, a peer device or other common network node, and so on. Logical connections between the computer **201** and a remote computing device **214a,b,c** can be made via a local area network (LAN) and a general wide area network (WAN). Such network connections can be through a network adapter **208.** A network adapter **208** can be implemented in both wired and wireless environments. Such networking environments are conventional and commonplace in offices, enterprise-wide computer networks, intranets, and the Internet **215.**

For purposes of illustration, application programs and other executable program components such as the operating system **205** are illustrated herein as discrete blocks, although it is recognized that such programs and components reside at various times in different storage components of the computing device **201,** and are executed by the data processor(s) of the computer. An implementation of financial data processing software **206** can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" comprise volatile and non-volatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

In an aspect, the disclosed methods and systems ("GlobeOne") can comprise a vertically integrated financial service platform with innovative solutions that are community based. With experience in financially underserved markets and diverse backgrounds in business, technology, finance and marketing, GlobeOne can make financial transactions more affordable, flexible, and convenient. GlobeOne can broaden scope of inclusive financial opportunity and security.

GlobeOne can be tailored to meet the needs of the financially immobile, those living paycheck to paycheck, and the unbanked and under-banked population. The service offering can include a branded debit card providing financial freedom for purchase or cash access, integrated with a suite of traditional banking accounts providing a path to savings and wealth building.

GlobeOne can establish licensing agreements with existing banks or new banks to form the GlobeOne network. These banks can constitute GlobeOne network backbone for exclusive member-to-member money transfers.

GlobeOne can meet gaps in financial opportunities between those living paycheck to paycheck, the under-banked, the unbanked, and the financially secure. GlobeOne can create financial mobility and financial opportunities for its community of members. Improving financial access can have positive implications not only for the members themselves, but for the countries in which the members live and from which the members originate. As individuals build wealth and obtain access to credit, new businesses can be started, disposable income increases, and local economies grow.

By having access to financial services, money can be kept in a safe, secure account. There can be freedom between members on domestic and international transfers. GlobeOne debit card can be used at merchants and ATMs worldwide. For lines of credit there is not a late fee, and an interest rate for the lines of credit can be below market. Therefore, credit history can be established with the GlobeOne debit card.

In an aspect, members can receive a portion of the interest income generated from the line of credit generated from the member's personal community. Members ("referrer members") who have referred another member ("referred member") can receive a portion of the revenue generated from the GlobeOne global community. Deposit balances can grow allowing individuals to save. Monthly statements can include account information and projections of growth.

The disclosed methods and systems can support local economies. Credit and income streams for individuals can increase business opportunities and economic growth. Full transparency of channels can create a safe and visible process for members. Secure electronic global network can be available to anyone with a smart phone or Internet connection. Predatory lenders can be avoided and a credit history can be safely built.

GlobeOne can provide financial security and social inclusion. New technology can be harnessed to provide innovative financial service platforms. Global financial networks can be readily accessible via mobile phone or Internet. GlobeOne can create opportunities to generate income, build assets, and manage risks and provide options for increased financial prosperity and mobility.

GlobeOne can ensure secure and safe services. Real-time access and important account information can be delivered. Full transparency of features, fees, and underwriting practices can be provided. GlobeOne can meet needs with a plurality of solutions to achieve financial goals and educate, inform and enforce fair practices for all members.

GlobeOne can encourage economic growth. Asset-building services for the members of a global community can be provided. Global communities can be served through policy reforms and consumer research. Near-term financial opportunities with long-term savings goals can be supported. Positive member experiences can be promoted through intelligent design and communication.

GlobeOne can deliver financial services to those living paycheck to paycheck, and the under-banked and unbanked communities ("GlobeOne Individual Members"). In an aspect, GlobeOne can establish a network of participating banks ("GlobeOne Member Banks") in key countries and regions including, but not limited to, the U.S., India, Mexico, Brazil, Latin America and Caribbean Region, Asia, Pacific Region, Africa, Middle East / Far East and Europe. Member Banks can join GlobeOne by executing a detailed membership agreement. GlobeOne Member Banks are also referred to herein as member financial institutions. GlobeOne Individual Members are also referred to herein as

In another aspect, GlobeOne can establish a standard set of banking services with specifications defining branding, features, functionality, pricing and policies that can be offered by each Member Bank, for example, a no monthly service fee checking account with debit card access, a secured line of credit, and a term savings account that serves as collateral for the line of credit. GlobeOne can require Member Banks to create a new package comprised of these services according to GlobeOne's specifications and operating rules.

In another aspect, a security (savings) account can be structured to serve as a wealth building vehicle and a collateral account with restricted access based on the status of the line of credit account and the members age (e.g., held until 59 1/2 years of age).

In another aspect, a safe and secure no cost money transfer service between Individual Members and Member Banks can be provided. As an example, an online bill payment service for Individual Members can be provided as permitted by local rules regulations. As another example, GlobeOne sweep transaction can be implemented, whereby line of credit accounts can be interrogated to determine whether an outstanding balance exists, and if so, a sweep of funds from a checking account can occur. As another example, the method can comprise establishing a new referral system, where Individual Members can be compensated for inviting other prospects that become members and contribute to the community. The invitation process cannot be dependent on banks, an Individual Member can invite a prospect in the same market or another market, with any Member Bank.

In another aspect, the method can comprise establishing a new "community-based" pricing and revenue income distribution approach whereby interest income from the line of credit accounts can be distributed monthly. As an example, Member Banks can retain 1/3rd of the interest posted/collected on all GlobeOne line of credit accounts opened within their institution invitation community. As an example, each GlobeOne Individual Member, in good standing, can receive 1/3rd of the interest posted/collected to GlobeOne line of credit accounts for members they invited, regardless of which Member Bank opened the account(s). As another example, all remaining interest from all GlobeOne Member Banks can be accumulated and distributed proportionately to all inviting Individual Members in good standing, based on the cumulative number of invitations. As a specific example, for a global community of 1000 credit line accounts, a member who invites 15 people can receive 15/1000ths of the Global Community distribution. As another example, 50% of distributions for Individual Members can be posted to the member's security account and 50% to the member's checking account.

In another aspect, a technology platform and cloud-based "application system" can be provided. The platform can comprise rules, policies, procedures, agreements, operations, functions, IT applications, combinations thereof, and the like. In an aspect, the platform can operationalize and maintain GlobeOne's services, members, and the Member Bank network, maintain a cross-reference database of all Individual Members, Member Bank and other data required to administer the GlobeOne relationship package and related services. In another aspect, the method can calculate the Member Bank retained interest, personal community distributions, and the global community distribution via the GlobeOne system. In another aspect, the method can provide proprietary value added services including money transfers, financial education, online GlobeOne account information and other services.

In an aspect, GlobeOne can be implemented using a group of standard bank services (e.g., checking, debit card, savings, and line of credit) configured uniquely for the program, boarded and managed by the Member Bank's core banking platform and bank policies, and augmented with additional services and data provided by GlobeOne.

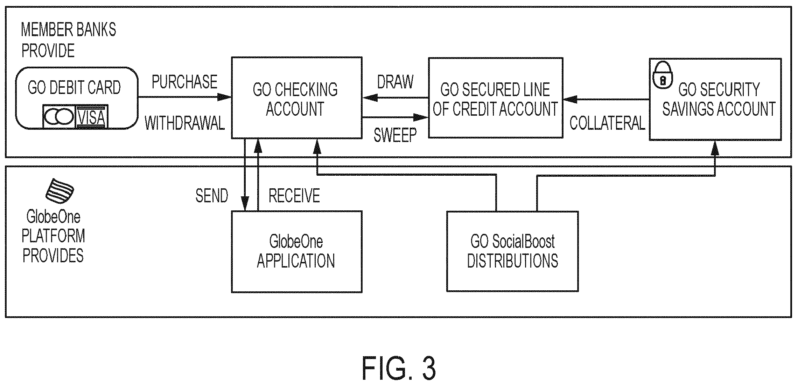

**FIG. 3** illustrates a block diagram of an example system.

### GO Debit Card

In an aspect, when a GO checking account is funded, the Member Bank can issue a debit card linked to the account. All normal debit card capabilities are anticipated. The existing branded debit card network access and infrastructure at the Member Bank can be utilized to manage GO debit card transactions at the point of sale (POS). As an example, a GO debit card can be presented at a merchant POS and can be processed by the merchant as a debit card transaction request. Authorization for the debit card transaction request can be sent from an acquiring processor of the merchant to the Member Bank's issuer card processor. The issuer card processor can forward the debit card transaction request to the Member Bank for approval or decline of the debit card transaction request. The Member Bank (issuer) can follow authorization process for debit transactions to the GO checking account. A decision can be made that the debit transaction is approved or declined by the Member Bank and the decision can be transmitted to the issuer card processor. The issuer card processor can transmit the decision to the acquiring processor. The acquiring processor can transmit the decision to the merchant POS.

### GO Checking Account (Demand Deposit Account)

A GO checking account can be a non-interest bearing, demand deposit account (DDA) that can allow access via GO debit card, money transfers, bill pay, eChecks, and ATM debit transactions which can be processed. In an aspect, for all debit transactions (e.g., GO debit card purchase, GO money transfer send, teller or ATM cash withdrawal, and the like) presented for payment, the GO checking account balance is considered first. If there is sufficient money available, the debit can be paid and posted. If there are insufficient funds available in the GO checking account, combined balances of the checking account and the GO credit line available credit can be calculated. If the combined balances are sufficient to cover the debit, the debit can be paid and posted and a transfer from the line of credit to the DDA occurs sufficient to cover items being presented. If there are insufficient funds available between combined checking account balance and available credit of the GO credit line account to pay the debit, the transaction can be declined and/or returned.

In an aspect, credit transactions can be processed using the following logic comprising a "sweep" feature. First, all deposit and credit transactions (e.g., a funding deposit, a direct deposit, a check deposit, a GO money transfer receive, and the like) can be posted to the checking account. Second, a credit line can be checked to determine whether there is an outstanding balance on a daily basis. Third, if an outstanding balance exists on the credit line, funds can be transferred from the checking account to the credit line account for the lesser of the outstanding balance of the line of credit or the checking account deposit balance. The intent of the "sweep" feature can be to reduce member exposure to accrued interest on the line of credit account.

### GO Secured Line of Credit

In an aspect, a line of credit account can be secured by the security (savings) account. In an aspect, the credit limit can be established at 75% of the security account balance. The line of credit can be linked to the demand deposit checking account and can provide advances to cover items presented where there are insufficient funds in the checking account to cover and pay. When an outstanding balance exists, the checking account can automatically be checked to determine whether there are funds on deposit that could be swept to the credit line to reduce or payoff the balance.

### GO Security Account

In an aspect, a GO security account can be an interest bearing term savings account that can be pledged as collateral for the GO line of credit. In addition, the security account can have an age restriction placed on funds accessibility requiring the owner to have reached 59 ½ years of age before gaining unlimited access to the member's funds.

### GlobeOne Network Operating Rules and Procedures

As a program manager for the GlobeOne network, GlobeOne can maintain and enforce a set of GlobeOne network operating rules and procedures (rules) that Member Banks can be contractually bound to adhere to when joining the GlobeOne network. Member Banks can provide service and operational support for a GlobeOne relationship banking package that encourages long term savings, reduces exposure to excessive finance charges, and provides a set of financial services capabilities that appeal to the target market. The following can be an example outline of a set of rules and operating procedures.

### Core Banking Services

GlobeOne can require Member Banks to create a new GO relationship package of bank services according to GlobeOne's specifications and operating rules. The Member Bank can develop and maintain a plurality of services in its core banking system. As an example, there can four primary services in the relationship banking package.

As an example, a service can comprise demand deposit checking account (DDA). A DDA can be a non-interest bearing demand deposit checking account that allows access via a GO debit card, money transfers, a bill pay, eChecks, an ATM, and the like. The DDA can be a service charge free "checking" account with no balance minimums.

As another example, a service can comprise a security account (SAV). A SAV can be an interest bearing term savings account. The account can be pledged as collateral for GO secured line of credit. In addition, the security account can have an age restriction placed on funds accessibility requiring the owner to have reached 59 ½ years of age, for example, before gaining unlimited access to his/her funds. Account can be free of monthly service charges or account maintenance fees.

As another example, a service can comprise a debit card (DC). The DC can be a debit card providing direct access to a demand deposit checking account.

As another example, a service can comprise a secured line of credit (LOC). The LOC can comprise a line of credit secured by the security (savings) account. As an example, the credit limit can be established at 75% of the security account balance. The LOC can be linked to the demand deposit checking account and can provide advances to cover items presented where there are insufficient funds in the checking account to pay. No annual or other maintenance fees can be assessed. All accounts can be individual consumer member only accounts, no joint ownership, authorized users, or multiple cards can be issued.

A Member Bank can provide support for a plurality of services. In an aspect, outsourcing of some or all services can be considered. As an example, the plurality of services can comprise opening new accounts (e.g., a DDA and a SAV accounts) via an on-line customer portal, issuing debit cards (e.g., GO debit card), processing and adjudicating secured line of credit application, linking the secured line of credit to DDA accounts, supporting sweep function to support DDA to LOC funds movement, and receiving and post monetary file advices for personal and global community distributions.

### GlobeOne Revenue Share

As an example, for membership fees, Member Banks can collect $9.95/month from each GlobeOne member for the GlobeOne membership with 100% of fee income going to GlobeOne. As another example, for interchange fees, Member Banks can retain all GlobeOne debit card interchange fee income. As another example, for interest income, Member Banks can retain 1/3rd of interest income billed to GlobeOne line of credit accounts each month for the Member Banks ATMs and issued GlobeOne debit cards. As another example, for miscellaneous fees, Member Banks can retain 100% of miscellaneous fee income charged to GlobeOne accounts to offset servicing costs. In an aspect, miscellaneous fees can be limited to those defined in the Member Bank agreement. An example GlobeOne portfolio metrics is shown in Table 1:

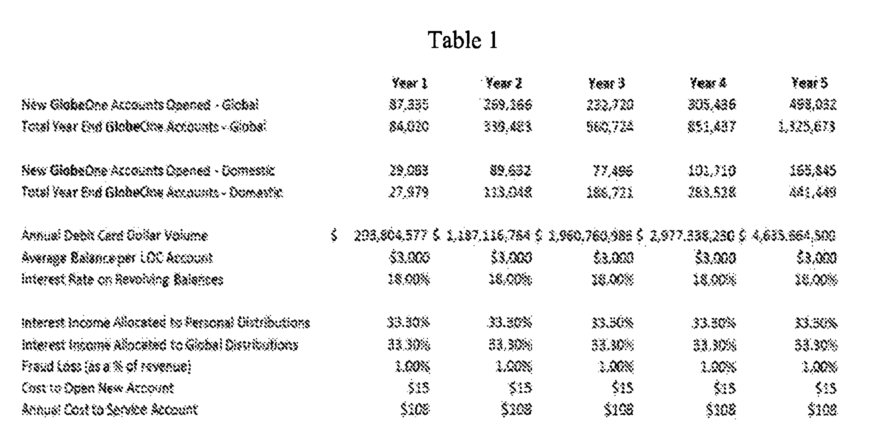

### Example fees and interest

Full transparency of features, fees, and underwriting practices can be provided. Member Banks can be required to limit fees for GlobeOne relationship package services. As an example, for membership fee, Member Bank can collect $9.95 per month for each member. For replacement cards, Member Bank can pass through GO debit card replacement card costs limited to $7.00 per request. For paper statements, members can opt to receive paper statements at no cost to them. Member Banks may charge a fee of $1.00 for paper statement reproduction printed and delivered at member's request. For foreign ATM fee, Member Bank can pass through to the member any out-of-network fees assessed by an ATM owner that is not part of the GlobeOne network. Interest rates for the GO credit line can be set by country. As an example, for United States, the interest rate can be the prime rate plus 14.75% APR. Interest calculation for the GO credit line can be computed using a simple average daily balance method. A grace period of 25 days from the billing date can be allowed for all draws against the GO credit line. Interest rates for the GO security account can be set by country, for United States, it can be 90 day Fed Funds plus 0.90% APY. No other fees are permitted for the GlobeOne relationship package services including account maintenance, penalties, or minimum balance fees. This includes charges for transfers and remittances.

### Core Banking Support

Member Banks can provide support for all traditional account opening and maintenance activities for relationship package of services including but not limited to the following activities. In an aspect, outsourcing of some or all activities can be a consideration. DDA and security (savings) account can be opened via on-line customer portal. Processing and adjudication of GO secured line of credit requests can be received via on-line customer portal. For new member fulfillment, issuance of GO debit card, required disclosures, and any ancillary fulfillment materials can be required by GlobeOne. GO secured line of credit can be linked to the DDA. A sweep function can be used to support DDA to LOC funds movement. Monetary file advices for personal and global community distributions can be received and posted. Participating Member Bank "Due To" and "Due From" settlement accounts for member-to-member money transfers and personal and global community distributions can be maintained. Ongoing account and customer service for GO relationship package can be provided. Online banking and bill payment functionality can be provided. Combined statements for the GO relationship package can be provided.

GlobeOne can require Member Banks to integrate, support and maintain the following GlobeOne developed services, features, or capabilities:

### GO Money Transfer

Member Banks can accept payment advices from the GlobeOne system for authorized member transfers within the GlobeOne network. Funds can be made immediately available to all receiving members of any Member Bank.

### Member Statements

Member Banks can generate and provide a "combined" statement to all members based on the Member Bank's monthly cycle schedule. The statement can include information on all related accounts including checking, security, and line of credit accounts. Statements can be mailed/made available within compliance and regulatory timeframes. In addition, Member Banks, with assistance from the GlobeOne development team, can be required to utilize available data to provide members with budgetary information to assist members in managing monthly finances.

### Member Personal and Global Community Distributions

In an aspect, Member Banks can accept payment advices from a GlobeOne central service for personal and global community distributions and make funds immediately available to members. As an example, 50% of distributions for Individual Members can be posted to members' security accounts and 50% to members' checking accounts.

### Settlement

Member Banks can be required to maintain Nostro and Vostro accounts at every other Member Bank. These accounts can be used to post and track money transfer advices and personal and global community distributions. Funding of accounts can be at the discretion of each Member Bank, but in no case can a Member Bank be allowed to let the account balances go negative.

### Service Levels

In an aspect, every customer interaction can be important and a "moment of truth" opportunity can be provided for their members. The result of customer interactions can form basis for customer perceptions and merely satisfying customers cannot be enough to earn their loyalty. Instead, customers can experience exceptional service worthy of their business and referral. The goal of GlobeOne membership community is to feel inclusive, supported and self-reliant in that the Member Banks can be there to serve its members.

In an aspect, GlobeOne services can be delivered in real-time or as close as possible to real-time as permitted by a Member Bank's core banking system and in-country funding methods. The manner and quality in which those services can be delivered need to exceed customer expectations.

GlobeOne can establish in a master service agreement an expected level of service for its members and relationship package of services. The following examples can be provided to demonstrate anticipated minimum service level requirements for GlobeOne relationship package:

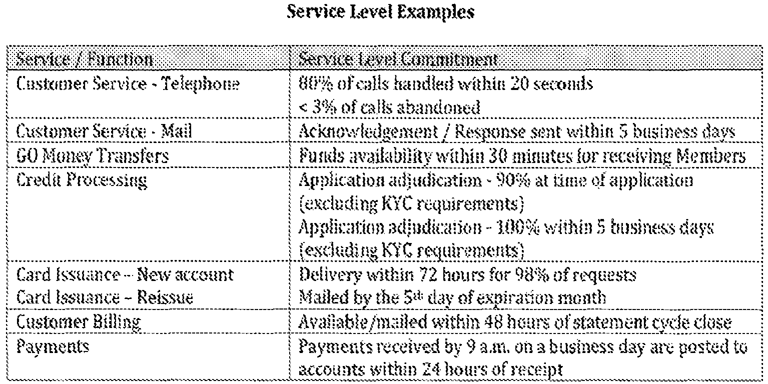

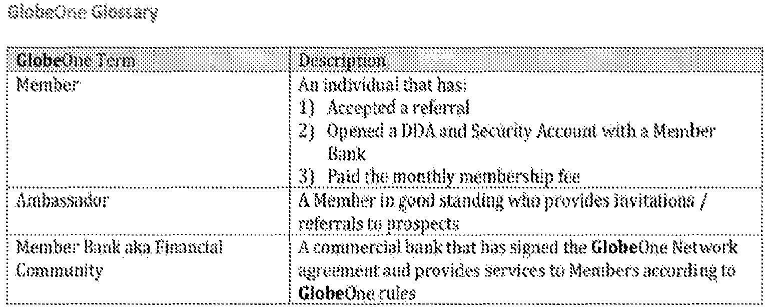

### GlobeOne Process Flows

As a program manager can define a process to be used by Member Banks to administer the program. The following is a high level overview of the major processes, roles and responsibilities of a GlobeOne central service and Member Banks.

### New Member Signup

When prospects wish to establish a relationship account with a GlobeOne central service, prospects can be invited by an existing member in good standing. Certain individuals can be designated as original members. These individuals can provide invitations for prospects starting the first day.

This single process can establish all relationship accounts, checking, security, line of credit and issuance of the GO card. Once the application is completed the can be adjudicated by the Member Bank and the processor. A decision tree approach can be used for adjudication to approve or reject an application. The decision tree can be designed to avoid expense for purchasing external data, if an application can be rejected for other reasons. A new member must pay the first month's membership fee in order to have the accounts boarded. Paying the membership fee upfront can avoid expense when prospects go through the approval process and then do not pay the membership fee. Unpaid, approved applications can be pended in the application system queue for 60 days and then declined. Storing the applications can avoid incremental adjudication expense if an applicant returns and pays the membership fee within the 60 day window.

### Money Transfer

A money transfer process can allow money transfers to occur between members of any of the Member Banks. By allowing only members to initiate transfers to other members, the disclosed methods and systems can avoid using payment network "rails" (e.g., Visa or MasterCard) to authorize and complete each transfer. Rather, the disclosed methods and systems can send "advices" to the Member Bank endpoints. Member Banks can then fund the transfers using a pair of Nostro/Vostro accounts. Using Nostro/Vostro accounts can allow nearly real-time posting of transfers. Member Banks can use a mutually agreed process to fund the Nostro/Vostro accounts asynchronously from the money transfer. For example, money transfer can be on a monthly basis or occur when Nostro/Vostro accounts reach certain thresholds.

### Employer Referrals

In an aspect, employer referrals can be implemented. Employees can be encouraged to have the employees' paychecks direct deposited to the employees' GO checking account. Direct deposit can allow the employees to have faster safer access to their pay, and help the employees avoid check-cashing fees. People who cash paychecks can often be targets of criminals when they leave a check cashing location. There can be several ways for an employer, in good standing, to accomplish this objective. As an example, employer referrals can comprise online, individual referrals. As another example, employer referrals can comprise batches of individual referrals. As another example, employer referrals can comprise individual applications completed online, or offline by employees, or uploaded from the employer's files, or mailed to GlobeOne and entered manually.

### Personal and Global Community Distribution

Distributing interest revenue among the members and Member Banks can allow members to benefit from a community and share in the financial revenues generated by the community. Members can be encouraged to fund their security account, which provides access to the line of credit. Members can also be encouraged to invite others to become members. The distribution can provide a means to build wealth, create security and establish a credit history. Interest income from credit line accounts can be distributed monthly. As an example, Member Banks can retain 1/3rd of the interest posted/collected on all GlobeOne line of credit accounts opened within their institution. Each GlobeOne Individual Member, in good standing, can receive 1/3rd of the interest posted/collected to GlobeOne line of credit accounts for members they invited regardless of which Member Bank opened the account(s). All remaining interest from all GlobeOne Member Banks can be accumulated and distributed proportionately to all inviting Individual Members in good standing based on the cumulative number of invitations made by each. For example a community of 1000 credit line accounts and a member invites 15 people, then the member can receive 15/1000ths of the community distribution. A portion of (e.g., 50%) of distributions for Individual Members can be posted to their security accounts and a portion of (e.g., 50%) to their checking accounts.

In an aspect, Member Banks can send detailed month-end files or transmissions for interest collected and account status to GlobeOne where it can be combined and the distributions can be calculated. GlobeOne can then send files of advices to each Member Bank, who in turn can post the distributions to the member accounts.

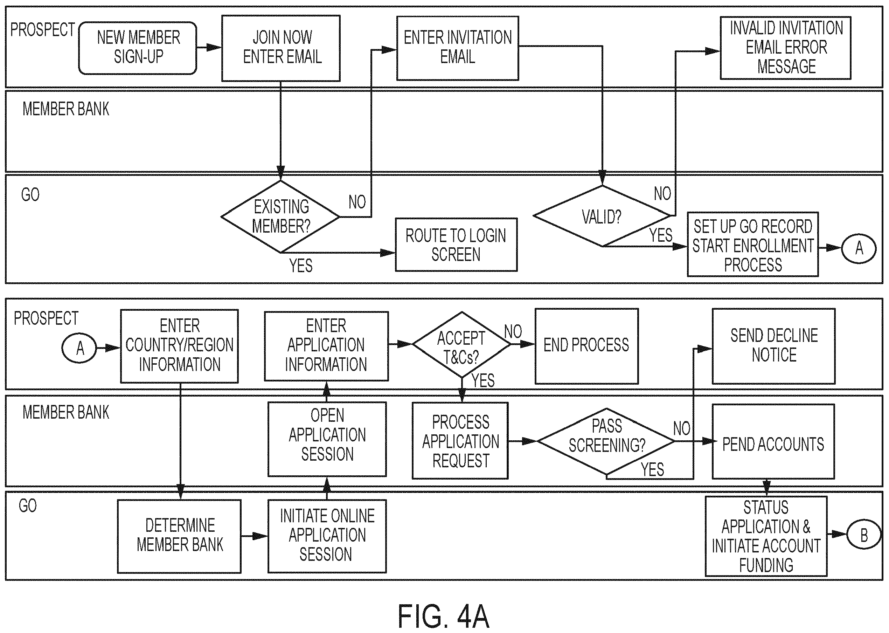

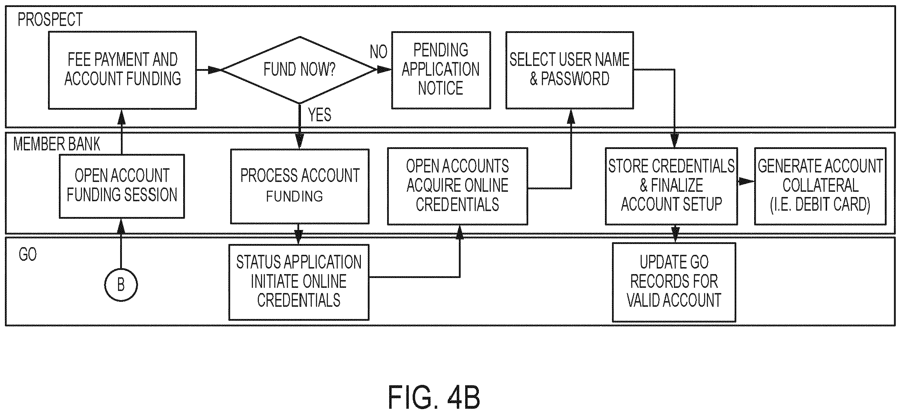

**FIG. 4A** and **FIG. 4B** is a flowchart illustrating a new member signup. Assumptions for the new member signup can comprise that prospects do not have existing accounts at a Member Bank. Prospects can have an invitation or know the email address of an existing member.

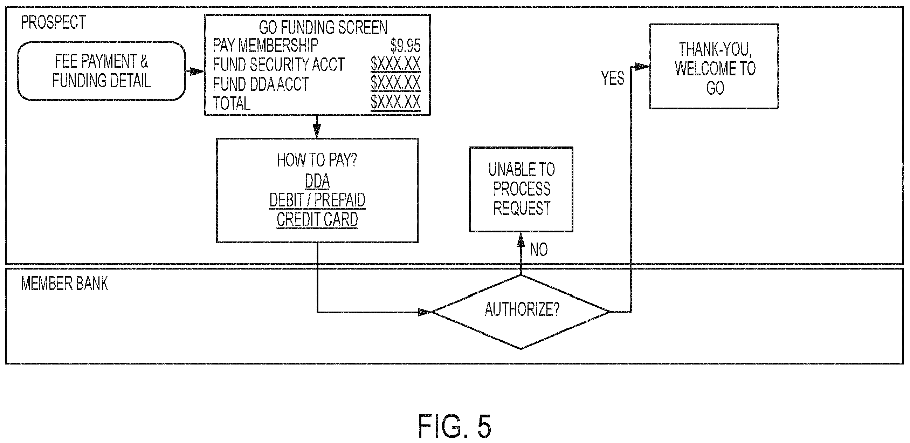

**FIG. 5** is a flowchart illustrating a fee payment and funding process. Assumptions for the process can comprise membership fee can be paid before Member Bank accounts are opened. A core banking system can store and retrieve pending applications.

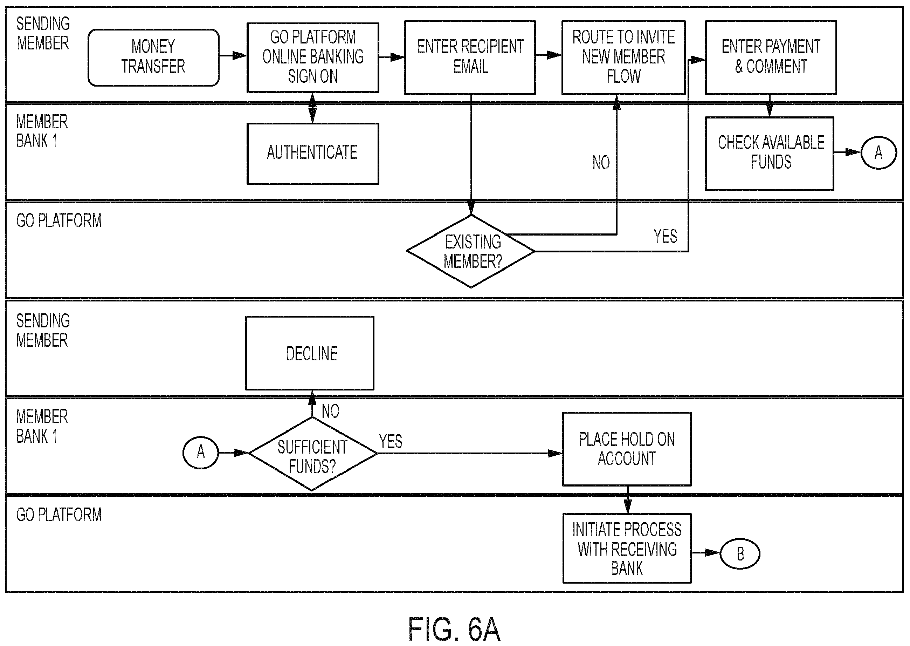

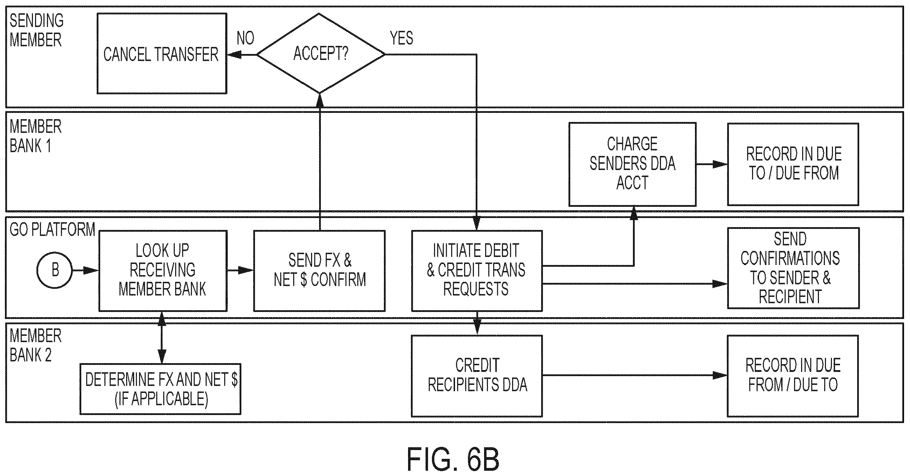

**FIG. 6A** and **6B** is a flowchart illustrating a money transfer process. Assumptions for the money transfer process can comprise members that can only send money transfers to other members of the Member Bank network (e.g., GlobeOne Member Bank network). In an aspect, a request for a monetary transfer can be received from a first member financial institution. In an aspect, the request can be received by the data feed manager **104.** The request for the monetary transfer can be from a sending member consumer to a receiving consumer. In an aspect, it can be determined whether the request for the monetary transfer is destined for a second member financial institution or is destined for a non-member financial institution. If the monetary transfer is destined for the second member financial institution, data indicative of the monetary transfer can be transferred to a monetary transfer data aggregator. If the monetary transfer is destined for the non-member financial institution, the data feed manager can determine the receiving consumer for the monetary transfer and invite the receiving consumer to join one of a plurality of member financial institutions.

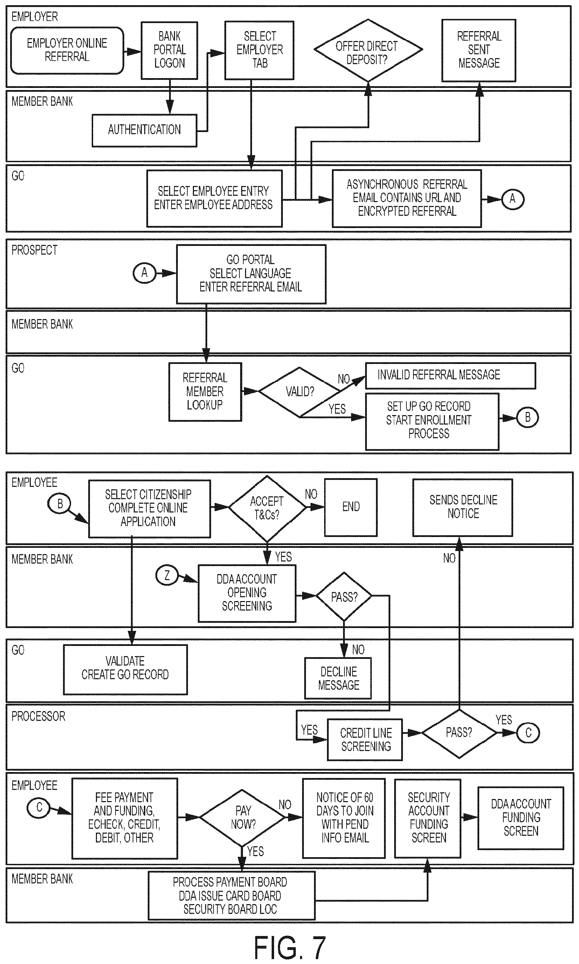

**FIG. 7** is a flowchart illustrating an employer online and/or email invitation setup. Assumptions for the setup can comprise employer inviting employees to join one at a time, and possibly offers direct deposit.

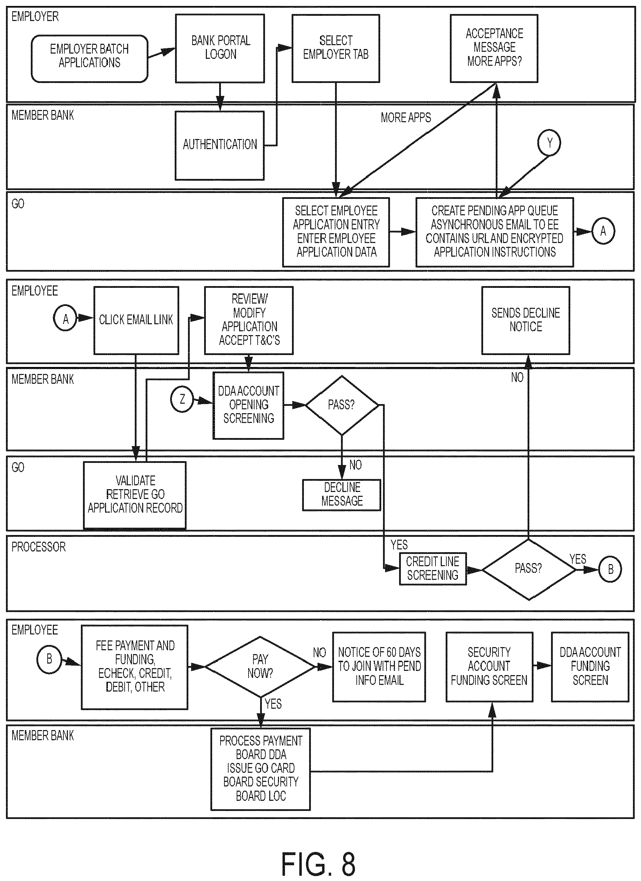

**FIG. 8** is a flowchart illustrating an employer online batch application setup. Assumptions for the setup can comprise an employer can be a member to refer an employee. An employer can enter application data on behalf of the employee. A pending application is created and the employee is advised to sign on and complete the application and provide authorization signature (paper and/or e-sign).

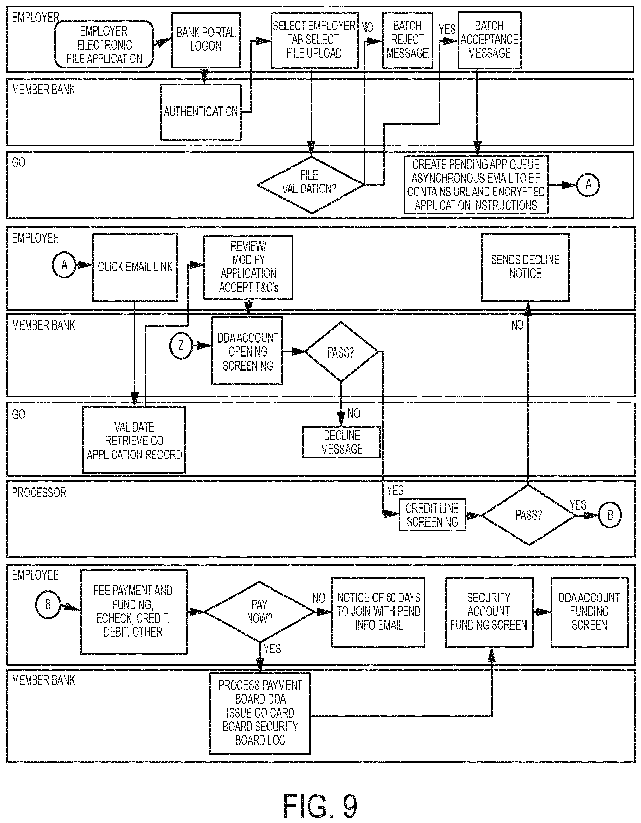

**FIG. 9** is a flowchart illustrating an employer electronic file application setup. Assumptions for the setup can comprise an employer can be a member to refer an employee. An employer can enter application data on behalf of an employee. A pending application can be created and an employee can be advised to sign on and complete the application and provide authorization signature (paper and/or e-sign).

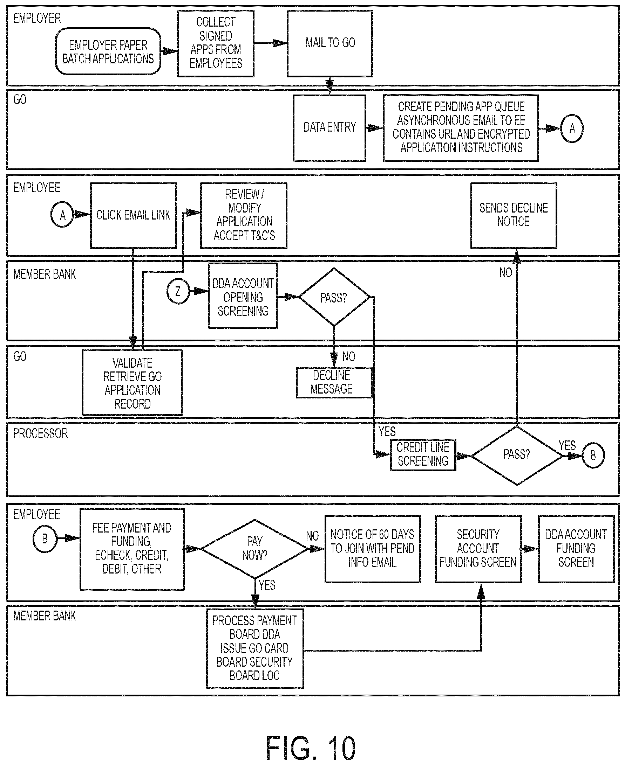

**FIG. 10** is a flowchart illustrating employer paper batch applications. Assumptions for the applications can comprise an employer can be a member to refer an employee. An employer can gather completed and signed applications from employees and mail to a GlobeOne central service (e.g., GO). The GlobeOne central service (e.g., GO) can enter data applications. A pending application can be created and the employee can be advised to sign on and complete the application and provide authorization signature (paper and/or e-sign).

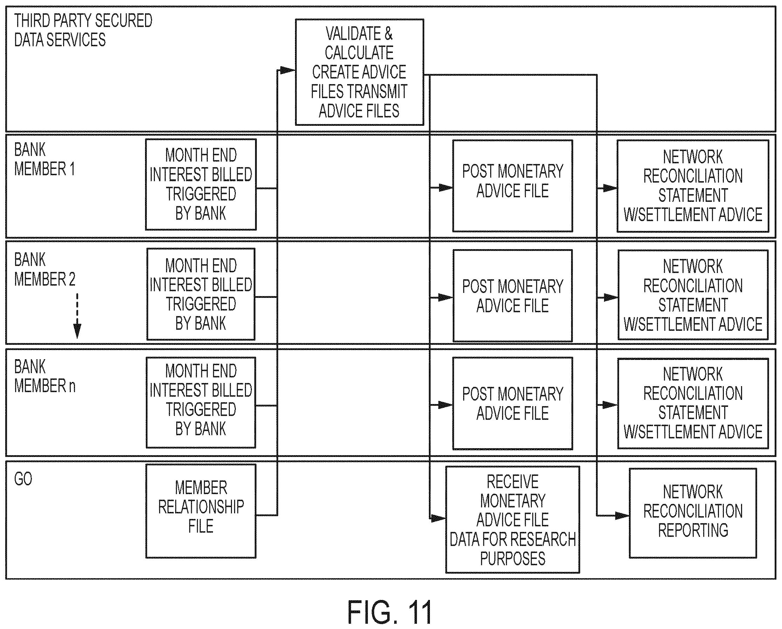

**FIG. 11** is a flowchart illustrating a member personal and global community process. Assumptions for the process can comprise only a member can invite a prospective member. A central service (e.g., distribution manager **103**) can maintain reference files to determine which member invitations are associated with which account.

In an aspect, provided are methods and systems for Individual Member-to-member money transfers. This feature, originating from the member's DDA account allows money transfers to occur between Individual Members of any of the member financial institutions.

Member financial institutions can accept monetary payment advices from the GO system for authorized member transfers within the GlobeOne network. In an aspect, money transfers can only be made between existing members in good standing. In an aspect, in the event that a money transfer is attempted to a non-member, instead of completing the money transfer, an email with a referral invitation can be sent to the receiving non-member consumer advising of the attempt to transfer funds and need to join the community to have the transfer credited.

To originate and complete the money transfer, a process can be implemented for each member financial institution (FI) using a combination of GlobeOne internal and external systems along with the member FI's existing online banking and core banking systems. The money transfer can use available funds from the member's DDA account first. If the total funds required for the transfer exceed the available DDA balance, the excess funds can be swept from the available credit in the LOC to the DDA account.

Member FIs can use a mutually agreed process to fund the Due From / Due To accounts asynchronously allowing the receiving member access to the transferred funds within 30 minutes.

Fund transfers can be made in the currency of the remitting financial institution. Due To bank accounts between Member Banks can carry a minimum balance (e.g., $1,000). All money transfers can be between member financial institutions and members within these financial institutions. All money transfers can be managed within the GlobeOne closed network. All transfers can be completed on an immediate, single transaction basis. Multiple money transfers will not be aggregated into a single transaction. Banking relationships (Due To / Due From) can be established between all member financial institutions.

To initiate a transfer, a sending member consumer can access their online banking account and is verified by the member financial institution. The Member Bank can validate the sending member consumer as a GO Member Bank customer. The sending member consumer can access the "Go Money Transfer" tab or section. The online system can provide an entry screen that includes the current amount available for transfer. The sending member consumer can enter a receiver consumer's email address, the amount of transfer, and any free form content such as the purpose of the transfer. The member financial institution can check the sending member consumer's remitter's DDA account to determine whether there are sufficient funds to make the transfer. If there are insufficient funds in the DDA account, then a check of the available credit line balance in LOC can be made and a transfer can be made if necessary. If funds are available, a business day hold can be placed on the sending member consumer's DDA account.

The sending member consumer can be shown a confirmation screen including payee's name, amount to be transferred, and the sending member consumer's last four digits of the sending member consumer's account number. The sending member consumer can then be asked to confirm or decline the transfer. If sending member consumer declines the transfer, the session is closed. If the transfer is approved, the sending member consumer's GO DDA account can be debited. A credit can also be generated to receiver consumer's member financial institution's Due From account domiciled at the sending member consumer's member financial institutions. The system can then generate a debit to the Due From and credit the receiving financial institution's Due To account. These balanced transactions are generated via GO technology.

The receiving member financial institution can receive an automated monetary advice. A confirmation email is sent to both the sending member consumer and the receiving consumer. Confirmation email can contain amount sent, sending bank, receiving bank, posting date, and the like. The automated monetary advice generated by GO technology can trigger automated settlement process at the receiving FI. A debit can be generated to the Due To account (at sender). A credit can be generated to the remitting FI's Due From Account domiciled at the receiving FI. A debit can then be generated to the Due From and a credit generated to the receiving member's DDA account.

In an aspect, GO technology can generate a daily settlement report for electronic availability to all sending / receiving financial institutions detailing the amount Due To and Due From all GlobeOne Member Banks/member financial institutions.

In an aspect, GlobeOne member financial institutions can be responsible to bring their Due To balances to minimum requirements on a daily basis. In an aspect, member financial institutions can be advised to reconcile all daily transfer activity with GlobeOne settlement reporting. In an aspect, monthly a DDA statement for the Due To account can be sent to the receiving FI for manual or automated reconciliation. In an aspect, transfers must be completed in a balanced / approved environment. All approved / completed money transfers must be reflected in the sending and receiving FI's positive balance files that the FI's branch, ATM and POS online systems use for transaction authorization.

Automated entries at the sending financial institution can only be accepted as a balanced / offsetting transaction at the sending financial institution and/or at the receiving financial institution. Where volume warrants, financial institutions can utilize reconcilement programs.

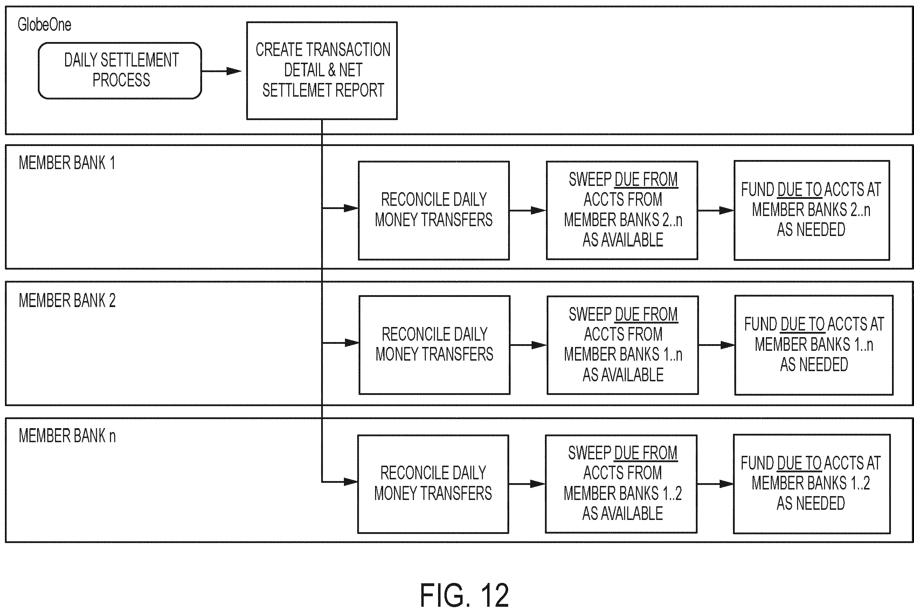

**FIG. 12** illustrates an example daily settlement process. Assumptions can comprise one or more of: Member Banks maintain, reconcile and fund Due From / Due To accounts daily with each other. GlobeOne can provide money transfer transaction reports and net settlement reports for reconcilement purposes.

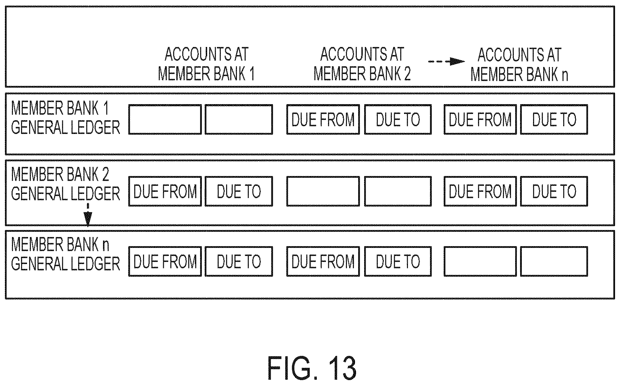

**FIG. 13** illustrates an example daily settlement process detail. In an aspect, for each pair of Member Banks, the methods and systems can subtract Due To from Due From: if > 0, sweep excess from Due From; if < 0, transfer deficit to Due To.

In a further aspect, provided is a method. The method can comprise receiving a request for a monetary transfer from a sending member consumer to a receiving member consumer. In an aspect, the sending member consumer or the receiving member consumer can be Individual Members. The sending member consumer can be associated with a first member financial institution. In an aspect, the receiving member consumer can be associated with a second member financial institution. The method can comprise funding, by the first member financial institution, the request by accessing one or more accounts associated with the sending member consumer generating. In an aspect, the first member financial institution can generate a debit to a Due To account associated the receiving member consumer. In an aspect, the first member financial institution can transmit a notification to the second member financial institution to generate a credit to a Due From account associated with the sending member consumer. In an aspect, the second member financial institution can generate a credit to an account associated with the receiving member consumer. The second member financial institution can transmit a notification to the first member financial institution to generate a debit to the Due From account associated with the sending member financial consumer.

In an aspect, the one or more accounts associated with the sending member consumer can comprise one or more of a demand deposit checking account (DDA) and a line of credit (LOC). The account associated with the receiving member consumer can comprise a demand deposit checking account (DDA). The first member financial institution and the second member financial institution can periodically adjust a plurality of Due To accounts to satisfy a minimum requirement.

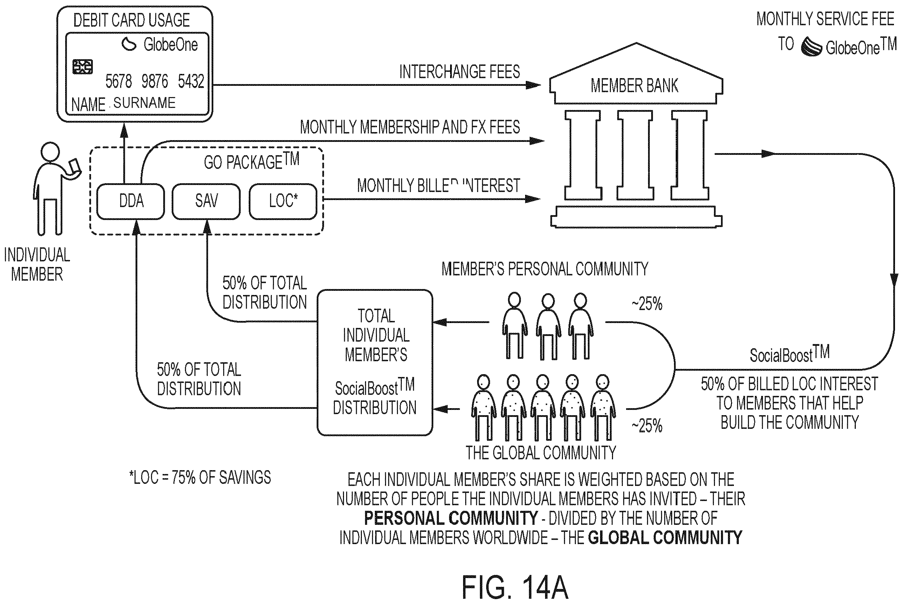

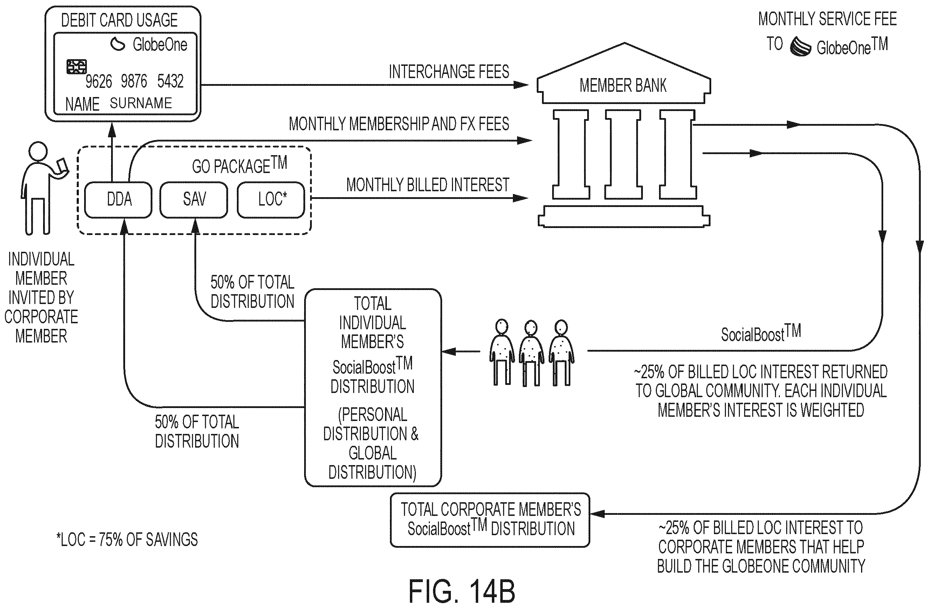

**FIG. 14A** and **FIG. 14B** are a flowcharts illustrating an example of a money transfer process. In an aspect, one or more seeding entities can be involved in the GlobeOne service system. The one or more seeding entities ("Corporate Members") can comprise social media advertising agencies, social network websites (e.g., Facebook and Twitter), and the like, which can advertise GlobeOne services on the respective websites, message boards, online community blogs, and the like. One or more Corporate Members can thus reach prospective GlobeOne Individual Members and/or GlobeOne Member Banks. In an aspect, the one or more Corporate Members can be compensated for their role in individuals and/or banks joining the GlobeOne system.

In an aspect, each GlobeOne Individual Member can hold one or more accounts in the GlobeOne system. For example, a GlobeOne member can have one or more security savings accounts, checking accounts, debit accounts, secured credit lines, and the like, with one or more Member Banks. For example, a GlobeOne member can make deposit into a savings account associated with a Member Bank. As another example, a GlobeOne member can utilize a GlobeOne debit card to perform a financial transaction at a GlobeOne merchant. As another example, a GlobeOne member can secure a loan from a Member Bank at a specific rate of interest.

In an aspect, a portion of the total fees collected by Member Banks from GlobeOne Individual Members can be returned to GlobeOne members. For example, one fourth of the total interest collected can be returned to GlobeOne members. The returned fees to GlobeOne Individual Members can be deposited automatically to the members' accounts. For example, 50% of returned fees to an Individual Member can be deposited a savings account associated with the Individual Member, and 50% of returned fees can be deposited in a debit account associated with the Individual Member. As another example, the returned fees can be deposited to an account with a lower balance. In an aspect, the percentage of fees returned to a GlobeOne Individual Members can be weighted on the basis of that member's GlobeOne banking history. For example, if an Individual Member pays a loan on schedule, the member can be designated as "preferred" and thereby earn a highest percentage of fees returned to GlobeOne members. In another aspect, the interest rate associated with a GlobeOne Individual Members can be weighted on the basis of that member's GlobeOne banking history. A preferred member can be provided with a lowest interest rate on a secured loan and highest interested rate on a saving account maintained by the preferred member.

In another aspect, a portion of the total fees collected by Member Banks from GlobeOne members can be distributed to one or more seeding entities ("Corporate Members"). For example, one fourth of total fees collected from a GlobeOne Individual Members who joined the GlobeOne system via a Corporate Member can be distributed to the Corporate Member as a commission. The percentage of the fees distributed to a specific Corporate Member can be weighted on the basis of the Corporate Member's performance. For example, if a Corporate Member participates in the recruitment of more than a predefined number of GlobeOne Individual Members or GlobeOne Member Banks, the Corporate Member can be designated as an "outstanding Corporate Member" and thereby returned a highest percentage of the fees paid by GlobeOne members recruited by the Corporate Member.

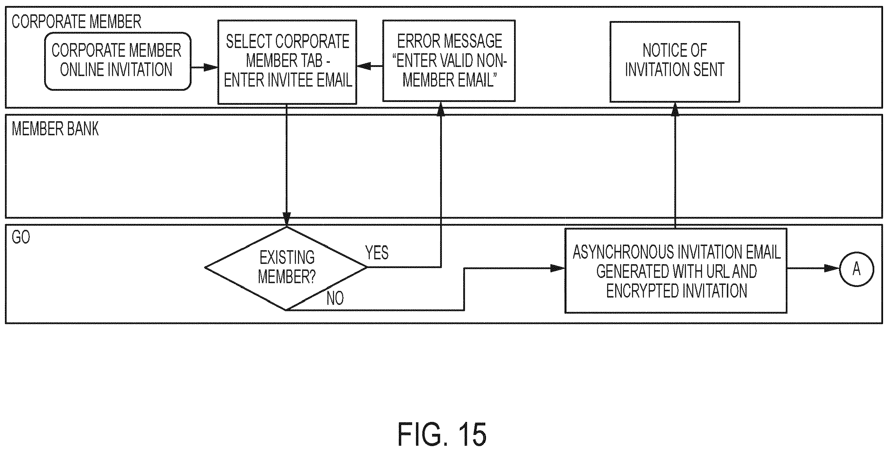

**FIG. 15** is a flowchart illustrating a seeding entity ("Corporate Member") invitation setup. Corporate Members can invite possible Corporate Members invitations to join GlobeOne. If the possible Corporate Member is already a Corporate Member then an error message can be returned to the inviting Corporate Member. If the possible Corporate Member is not a Corporate Member, then the system can send an encrypted invitation to the Corporate Member to join GlobeOne.

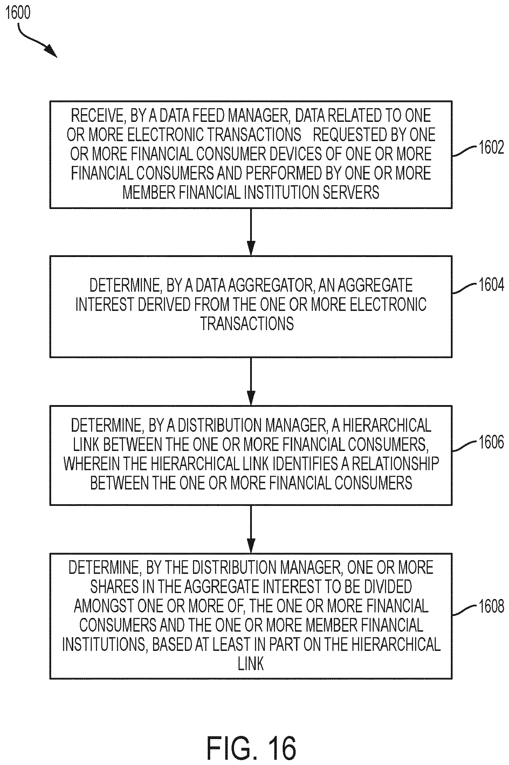

**FIG. 16** illustrates a method **1600** for providing financial services, according to an aspect. In step **1602,** a data feed manager can receive data related to one or more electronic transactions requested by one or more financial consumer devices of one or more financial consumers. The electronic transactions can be performed by one or more member financial institutions. In an aspect, the one or more electronic monetary transactions can occur over a network. In an aspect, the methods and systems can be implemented to address problems with electronic monetary transactions that only occur on the network. In an aspect, the data from the one or more transactions can comprise one or more of a fee for a service, an interest revenue from lines of credit, and the like. In an aspect, the one or more member financial institutions can belong to a closed network of member financial service group.

In step **1604,** a data aggregator, can determine an aggregate interest derived from the one or more electronic transactions. The aggregated interest can be revenue from fees and interest among the members and member financial institutions. In step **1606,** a distribution manager can determine a hierarchical link between the one or more financial consumers. In an aspect, the hierarchical link can identify a relationship between the one or more financial consumers. In an aspect, the relationship can comprise a senior member/junior member relationship. In an aspect, the relationship can identify one or more referrer financial consumers of the one or more financial consumers that referred one or more referred financial consumers of the one or more financial consumers to become a member at the one or more financial institutions.

In step **1608,** the distribution manager can determine one or more shares in the aggregate interest to be divided amongst one or more of, the one or more financial consumers and the one or more member financial institutions, based at least in part on the hierarchical link. Dividing the aggregated interest amongst the one or more of, the one or more financial consumers and the one or more member financial institutions can allow member financial consumers to benefit from a community and share in the financial revenues generated by the community. In an aspect, financial consumers can also be encouraged to invite others to become members. The distribution can provide a means to build wealth, create security, and establish a credit history. Aggregated interest from credit line accounts can be distributed monthly.

In an aspect, the one or more shares of aggregated interest can be determined based on a factor from the data related to the one or more transactions. As an example, member financial institutions can retain 1/3rd of the aggregated interest posted/collected on all GlobeOne line of credit accounts opened within their institution. Each financial consumer, in good standing, can receive 1/3rd of the aggregated interest posted/collected to GlobeOne line of credit accounts for members they invited regardless of which Member Bank opened the account(s). All remaining aggregated interest from all GlobeOne member financial institutions can be accumulated and distributed proportionately to all inviting Individual Members in good standing based on the cumulative number of invitations made by each. For example, in a community of 1000 credit line accounts if a member invites 15 people, then the member can receive 15/1000ths of the community distribution. As another example factor for determining the one or more shares of aggregated interest, the one or more shares of aggregated interest can be based on a factor of status within the closed network such as whether a financial consumer is current with their line of credit account, pays bills early, has a high security account balance, combinations thereof, and the like.

In an aspect, the distribution manager can determine one or more shares in the aggregate interest to be divided with one or more seeding entities ("Corporate Members"). The one or more seeding entities can be involved in the GlobeOne service system. The one or more seeding entities can comprise social media advertising agencies, social network websites (e.g., Facebook and Twitter), and the like, which can advertise GlobeOne services on the respective websites, message boards, online community blogs, and the like. One or more seeding entities can thus reach prospective GlobeOne Individual Members and/or GlobeOne Member Banks. In an aspect, the one or more Corporate Members can be compensated for their role in individuals and/or banks joining the GlobeOne system from the aggregated interest.

In an aspect, financial consumers can be encouraged to fund their security account, which provides access to the line of credit. In an aspect, the distribution manager can deposit the one or more shares of the aggregated interest into at least one of a demand deposit checking account (DDA) and a savings account of a financial consumer of the one or more financial consumers. As an example, a portion of (e.g., 50%) of aggregated interest for Individual Members can be posted to their security accounts and a portion of (e.g., 50%) to their checking accounts.

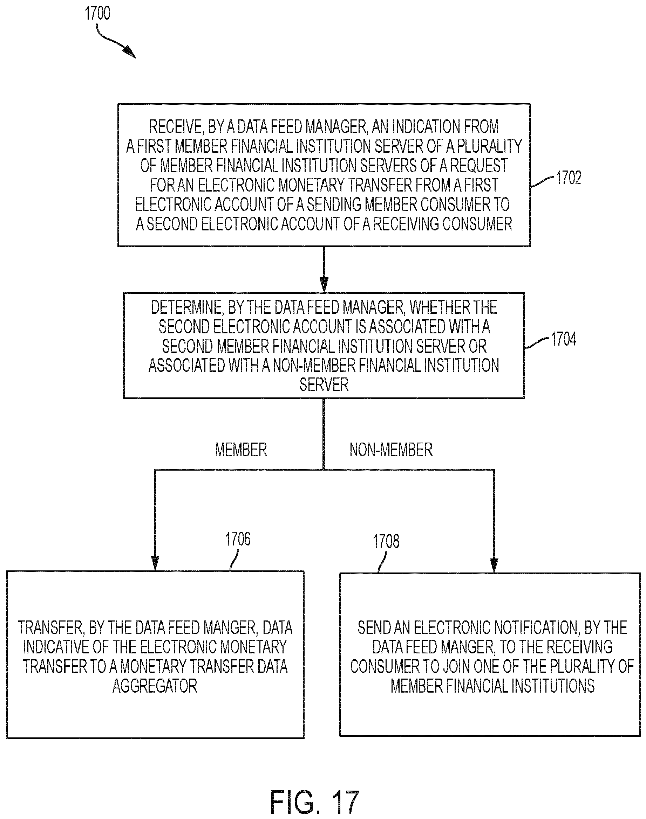

**FIG. 17** illustrates a method **1700** for providing financial services, according to an aspect. In step **1702,** a data feed manager can receive an indication from a first member financial institution server of a plurality of member financial institution servers of a request for an electronic monetary transfer from a first electronic account of a sending member consumer to a second electronic account of a receiving consumer. In an aspect, the receiving consumer can be a member consumer belonging to a second member financial institution of the plurality of member financial institutions. In an aspect, the second member can be a non-member consumer belonging to a non-member financial institution.

In step **1704,** the data feed manager can determine whether the second electronic account is associated with a second member financial institution server or associated with a non-member financial institution server. An electronic monetary transfer process can allow money transfers to occur between members of any of the member financial institutions. By allowing only members to initiate electronic monetary transfers to other members, the disclosed methods and systems can avoid using payment network "rails" (e.g., Visa or MasterCard) to authorize and complete each transfer. Rather, the disclosed methods and systems can send "advices" to the Member Bank endpoints. Member financial institutions can then fund the electronic monetary transfers using a pair of Nostro/Vostro accounts. Using Nostro/Vostro accounts can allow nearly real-time posting of transfers. In an aspect, member financial institutions can use a mutually agreed process to fund the Nostro/Vostro accounts asynchronously from the money transfer. For example, money transfer can be on a monthly basis or occur when Nostro/Vostro accounts reach certain thresholds. In an aspect, the monetary transfers can be electronic monetary transactions that occur over a network. In an aspect, the methods and systems can be implemented to address problems with electronic monetary transactions that only occur on the network.

In step **1706,** if the second electronic account is associated with the second member financial institution server, the data feed manager can transfer data indicative of the electronic monetary transfer to a monetary transfer data aggregator. In an aspect, if the electronic monetary transfer is destined for the second member financial institution, then the first member financial institution can fund the request by accessing from the first electronic account one or more accounts associated with the sending member consumer. The first member financial institution can generate a debit to a Due To electronic account associated with the receiving consumer. The first member financial institution can transmit a notification to the second member financial institution to generate a credit to a Due From account associated with the sending member consumer. In an aspect, the second member financial institution can generate a credit to an account associated with the receiving consumer. In an aspect, the second financial institution can send a notification to the first member financial institution to generate a debit to the Due From account associated with the sending member consumer. In an aspect, the first financial institution can receive the notification from the second member financial institution to generate a debit to the Due From account associated with the sending member consumer.

In an aspect, the one or more accounts associated with the sending member consumer can comprise one or more of a demand deposit checking account (DDA) and a line of credit (LOC). In an aspect, the account associated with the receiving consumer can comprise a demand deposit checking account (DDA). In an aspect, the first member financial institution and the second member financial institution can periodically adjust a plurality of Due To accounts to satisfy a minimum requirement.

In step **1708,** if the monetary transfer is destined for the non-member financial institution server, the data feed manager can send an electronic notification to the receiving consumer to join one of the plurality of member financial institutions. In an aspect, if the receiving consumer does not join the one of the plurality of member financial institutions, then the data feed manager can credit an amount of the electronic monetary transfer to the first electronic account of the sending member consumer.

The methods and systems can employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

While the methods and systems have been described in connection with preferred embodiments and specific examples, it is not intended that the scope be limited to the particular embodiments set forth, as the embodiments herein are intended in all respects to be illustrative rather than restrictive.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

Throughout this application, various publications are referenced. The disclosures of these publications in their entireties are hereby incorporated by reference into this application in order to more fully describe the state of the art to which the methods and systems pertain.

It will be apparent to those skilled in the art that various modifications and variations can be made without departing from the scope or spirit. Other embodiments will be apparent to those skilled in the art from consideration of the specification and practice disclosed herein. It is intended that the specification and examples be considered as exemplary only, with a true scope and spirit being indicated by the following claims.

## Claims

1. A system comprising:
a closed group of member financial institution servers;
a data feed manager configured to communicate amongst the closed group of member financial institution servers over a network;
a data aggregator configured to aggregate data related to transactions conducted by the closed group of member financial institution servers,
wherein the aggregated data comprises an aggregated interest from the transactions;
and a distribution manager configured to determine one or more distribution levels for the member financial institutions based on the aggregated data.

2. The system of claim 1, wherein the transactions are requested by one or more financial consumers and performed by one or more member financial institutions of the closed group of member financial institution servers.

3. The system of claim 2, wherein the distribution manager is further configured to, determine a hierarchical link between the one or more financial consumers, and divide amongst one or more of, the one or more financial consumers and the one or more member financial institutions the aggregated interest based at least in part on the hierarchical link.

4. The system of claim 3, wherein the distribution manager is further configured to, deposit the one or more shares of the aggregated interest into at least one of a demand deposit checking account (DDA) and a savings account of a financial consumer of the one or more financial consumers.

5. The system of claim 3, wherein the hierarchical link identifies a relationship between the one or more financial consumers.

6. The system of claim 4, wherein the relationship identifies one or more referrer financial consumers of the one or more financial consumers that referred one or more referred financial consumers of the one or more financial consumers to become a member at the one or more financial institutions.

7. The system of claim 1, wherein the distribution manager is further configured to determine one or more distribution levels for one or more seeding entities.

8. A method comprising:
receiving, by a data feed manager, data related to one or more electronic transactions requested by one or more financial consumer devices of one or more financial consumers and performed by one or more member financial institution servers;
determining, by a data aggregator, an aggregate interest derived from the one or more electronic transactions;
determining, by a distribution manager, a hierarchical link between the one or more financial consumers, wherein the hierarchical link identifies a relationship between the one or more financial consumers;
and determining, by the distribution manager, one or more shares in the aggregate interest to be divided amongst one or more of, the one or more financial consumers and the one or more member financial institutions, based at least in part on the hierarchical link.

9. The method of claim 8, further comprising, depositing, by the distribution manager, the one or more shares of the aggregated interest into at least one of a demand deposit checking account (DDA) and a savings account of a financial consumer of the one or more financial consumers.

10. The method of claim 8, wherein the one or more financial consumers and the one or more financial institution servers belong to a closed financial service group.

11. The method of claim 8, wherein the relationship comprises a senior member/junior member relationship.

12. A method comprising:
receiving, by a data feed manager, an indication from a first member financial institution server of a plurality of member financial institution servers of a request for an electronic monetary transfer from a first electronic account of a sending member consumer to a second electronic account of a receiving consumer; determining, by the data feed manager, whether the second electronic account is associated with a second member financial institution server or associated with a non-member financial institution server; if the second electronic account is associated with the second member financial institution server, transferring, by the data feed manger, data indicative of the electronic monetary transfer to a monetary transfer data aggregator; and
if the electronic monetary transfer is destined for the non-member financial institution server, sending an electronic notification, by the data feed manger, to the receiving consumer to join one of the plurality of member financial institutions.

13. The method of claim 12, wherein if the receiving consumer does not join the one of the plurality of member financial institutions, crediting an amount of the electronic monetary transfer to the first electronic account of the sending member consumer.

14. The method of claim 12, wherein if the second electronic account is associated with the second member financial institution server, funding, at the first member financial institution server, the request by accessing from the first electronic account one or more electronic accounts associated with the sending member consumer, generating, at the first member financial institution server, a debit to a Due To electronic account associated with the receiving consumer, and transmitting a notification to the second member financial institution server to generate a credit to a Due From electronic account associated with the sending member consumer.

15. The method of claim 14, wherein if the electronic monetary transfer is destined for the second member financial institution server, receiving a notification, by the first member financial institution server, to generate a credit to a Due From electronic account associated with the sending member consumer.
